# FASCICULE DE BREVET EUROPEEN

(11) **EP 1 961 651 B1**
(45) Date de publication et mention de la délivrance du brevet: **18.11.2009**
(21) Numéro de dépôt: 08290054.9
(22) Date de dépôt: 21.01.2008
(51) Int. Cl.: B62M 9/10

(54) **Pédalier de cycle à plateaux doubles**
Fahrradpedal mit Doppeltrittflächen
Bicycle crankset with double chain wheels

(30) Priorité: 23.02.2007 FR 0701320
(43) Date de publication de la demande: 27.08.2008
(73) Titulaire: Look Cycle International, 58000 Nevers (FR)
(72) Inventeur: Bouchez, Julien, 45220 Saint Germain Des Pres (FR)
(74) Mandataire: Laget, Jean-Loup

(56) Documents cités:
- DE-C- 892 561
- US-A- 4 144 773
- US-A- 5 213 550

## Description

La présente invention concerne un pédalier de cycle. Elle concerne également un cycle pourvu d'un pédalier selon l'invention.

L'invention concerne en particulier un pédalier de cycle à plateaux doubles, c'est-à-dire qu'il comporte un plateau dénommé grand plateau permettant d'obtenir un grand développement pour l'utilisation du cycle en descente ou en plaine, et un plateau dénommé petit plateau à denture réduite par rapport au grand plateau et qui permet de monter plus facilement les côtes ou de démarrer plus aisément.

Le pédalier de cycle à plateaux doubles est d'abord apparu sur les bicyclettes de course et son utilisation est par la suite devenue courante aussi sur les bicyclettes de route. Le document DE 892561 C reflète l'état de la technique.

Tout pédalier de cycle de ce genre comporte un axe de pédalier, deux manivelles reliées à des extrémités opposées de cet axe de pédalier et s'étendant en sens opposé l'une par rapport à l'autre, ainsi qu'un porte-plateau portant un premier et un deuxième plateaux dentés circulaires de diamètre différent aptes à coopérer, un à la fois, avec une chaîne d'entraînement du cycle. Ce porte-plateau est pourvu d'un trou central recevant l'axe de pédalier qui est rendu solidaire en rotation avec le porte-plateau.

Les premier et deuxième plateaux sont en général associés à la manivelle droite du pédalier et sont montés amovibles par rapport à celle-ci. De cette manière, les plateaux peuvent être remplacés en cas d'usure, mais aussi lorsque l'utilisateur souhaite modifier son développement en utilisant des dentures différentes.

Afin de permettre un montage aisé et précis des premier et deuxième plateaux, le porte-plateau présente la forme d'une étoile dont les branches sont régulièrement espacées, chaque branche étant à proximité de son extrémité libre pourvue d'un trou de fixation recevant un moyen de fixation des plateaux sur le porte-plateau. Ces trous de fixation sont disposés sur un cercle à diamètre prédéterminé et centré sur le trou central du porte-plateau. Chaque trou de fixation est aligné sur un trou de fixation prévu dans les premier respectivement deuxième plateaux.

Le diamètre de ce cercle est adapté aux extrémités des branches afin de permettre le passage libre de la chaîne autour du plateau de taille réduite.

Ce porte-plateau connu est pourvu de deux portées circulaires surélevées de part et d'autre de celui-ci qui correspondent à ce cercle. L'une des portées est située du côté extérieur du cycle proche de la manivelle droite, et l'autre portée est disposée du côté intérieur plus proche du cadre de cycle. Ces portées permettent la fixation rigide des plateaux de part et d'autre du porte-plateau à l'aide de moyens de fixation traversant les trous de fixation alignés prévus sur les plateaux et sur le porte-plateau.

Un porte-plateau très répandu devenu standard consiste en une étoile à cinq branches dont la portée circulaire avec les trous de fixation est de 130 mm de diamètre. Ainsi le cycliste peut monter des plateaux de la marque d'origine, mais aussi des plateaux rendus compatibles et fournis par d'autres équipementiers spécialisés.

Maintenant, pour l'escalade de pentes très raides, des plateaux encore plus réduits sont parfois nécessaires ou tout au moins préférables pour limiter les efforts et la fatigue du cycliste.

Afin de résoudre ce problème, une des solutions consiste à prévoir trois plateaux, ce qui cependant entraîne un encombrement et un poids plus importants, ainsi qu'une gestion des développements plus complexe. Ces plateaux nécessitent en plus l'emploi de dérailleurs particuliers, aussi bien à l'avant qu'à l'arrière. Un autre inconvénient est que ce pédalier nécessite un axe de pédalier plus long.

Une évolution plus récente, initiée par l'apparition de pignons arrière de plus en plus petits, a conduit à proposer un autre type de pédalier à plateaux doubles, à dentures plus faibles, pour rendre plus aisées les grimpées. Ce type de pédalier est appelé compact, en raison de l'encombrement plus faible de tout l'ensemble. Ces pédaliers ne sont toutefois ni agréables ni rationnels pour une utilisation en terrain de profil moyen, les développements à adopter en plaine amenant à un croisement important de la chaîne qui travaille alors dans de mauvaises conditions.

Ces plateaux permettent un usage occasionnel, à condition que les manivelles soient changées. En effet, les dimensions réduites de ces plateaux, en l'occurrence du petit plateau, ne permettent pas la fixation des plateaux sur un porte-plateau de diamètre 130 mm correspondant au standard. Une dimension spécifique de 110 mm de diamètre du cercle de fixation sur le porte-plateau a donc été adoptée pour ce type de pédalier.

Le but de l'invention est de remédier aux inconvénients mentionnés ci-dessus en proposant un pédalier pourvu d'un porte-plateau polyvalent permettant d'adapter tout aussi bien les plateaux dits standard que les plateaux dits compacts.

L'objet de l'invention est un pédalier de cycle, comportant un axe de pédalier, deux manivelles reliées à des extrémités opposées dudit axe de pédalier, un porte-plateau pourvu d'un trou central recevant ledit axe de pédalier et portant un premier et un deuxième plateaux dentés circulaires de dimension différente, ledit porte-plateau présentant la forme d'une étoile dont les branches sont régulièrement espacées, chaque branche étant à proximité de son extrémité libre pourvue d'un trou de fixation aligné sur un trou de fixation prévu dans lesdits premier respectivement deuxième plateaux, lesdits trous de fixation alignés recevant un moyen de fixation desdits plateaux sur ledit porte-plateau, lesdits trous de fixation étant disposés sur un premier cercle à diamètre prédéterminé et centré sur ledit trou central, chaque branche du porte-plateau est pourvue d'un deuxième trou de fixation disposé sur un deuxième cercle concentrique audit premier cercle et présentant un diamètre réduit par rapport à celui dudit premier cercle caractérisé en ce que les deuxièmes trous de fixation sont positionés de manière à adapter le porte-plateau pour remplacer lesdits premier et deuxième plateaux par deux autres plateaux dentés circulaires à dimension respectivement réduite par rapport à celle desdits premier et deuxième plateaux et dont les trous de fixation sont disposés sur ledit deuxième cercle.

Selon d'autres caractéristiques de l'invention :
- chaque branche dudit porte-plateau est définie par deux bords latéraux sensiblement parallèles l'un à l'autre et reliés par un bord d'extrémité ;
- ledit bord d'extrémité est oblique par rapport auxdits bords latéraux ;
- ledit premier trou et ledit deuxième trou de chaque branche sont alignés l'un sur l'autre parallèlement audit bord d'extrémité ;
- ledit deuxième plateau est relié audit porte-plateau par l'intermédiaire dudit premier plateau ;
- ledit porte-plateau est disposé à l'extérieur desdits premier et deuxième plateaux ;
- des entretoises sont régulièrement disposées entre lesdits premier et deuxième plateaux ;
- lesdites entretoises sont constituées par des rondelles associées auxdits moyens de fixation ;
- lesdits premier et deuxième plateaux sont des plateaux dits standard et que lesdits autres plateaux à dimension réduite sont des plateaux dits compacts ;
- ledit premier cercle correspond auxdits plateaux dits standard et présente un diamètre d'environ 130 mm, alors que ledit deuxième cercle correspond auxdits plateaux dits compacts et présente un diamètre d'environ 110 mm.

L'invention a également pour objet un cycle comportant un pédalier de cycle présentant une ou plusieurs des caractéristiques mentionnées ci-dessus.

D'autres caractéristiques et avantages de l'invention ressortiront de la description qui va suivre d'un mode de réalisation non limitatif de l'invention, en référence aux figures annexées dans lesquelles :
- la figure 1 est une vue schématique de face illustrant un porte-plateau portant un premier et un deuxième plateaux dits standards ;
- la figure 2 est une vue de dessus de l'ensemble illustré à la figure 1;
- la figure 3 est une vue schématique de face illustrant un porte-plateau portant un premier et un deuxième plateaux dits compacts ;
- la figure 4 est une vue de dessus de l'ensemble illustré à la figure 3;
- la figure 5 est une vue de dessus éclatée montrant un pédalier de cycle selon l'invention ;
- les figures 6 et 7 sont des vues éclatées en perspective montrant tous les éléments du pédalier de la figure 5.

Dans les figures, les éléments identiques ou équivalents porteront les mêmes signes de référence.

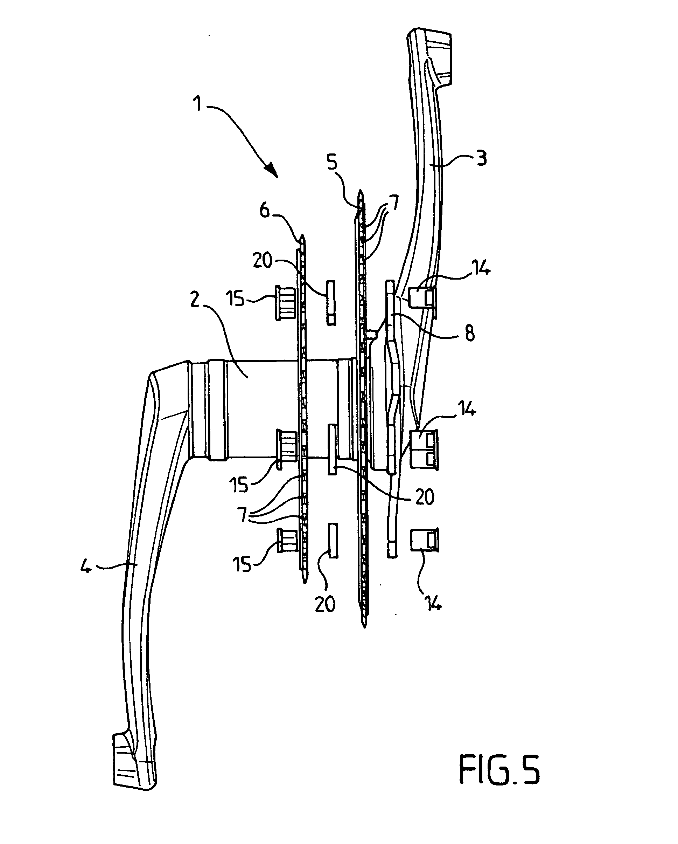

Le pédalier de cycle 1 (voir figure 5) comporte un axe de pédalier 2 qui à ses extrémités opposées est relié à une manivelle droite 3 respectivement à une manivelle gauche 4 s'étendant dans des sens opposés. Les manivelles 3 et 4 sont aptes à porter à leur extrémité une pédale droite respectivement une pédale gauche (non représentées).

Le pédalier de cycle selon l'invention est en particulier un pédalier du type à doubles plateaux, à savoir un premier plateau denté 5 et un deuxième plateau denté 6 de diamètre différent, le premier plateau 5 étant de plus grande dimension que le deuxième plateau 6. Les dents 7 des premier et deuxième plateaux 5, 6 sont aptes à coopérer avec une chaîne d'entraînement (non représentée) qui à son tour entraîne en rotation la roue arrière (non représentée) d'un cycle.

Les premier et deuxième plateaux 5, 6 sont fixés sur un porte-plateau 8 pourvu d'un trou central 9 recevant l'axe de pédalier 2 rendu solidaire en rotation avec le porte-plateau 8 par un engagement positif.

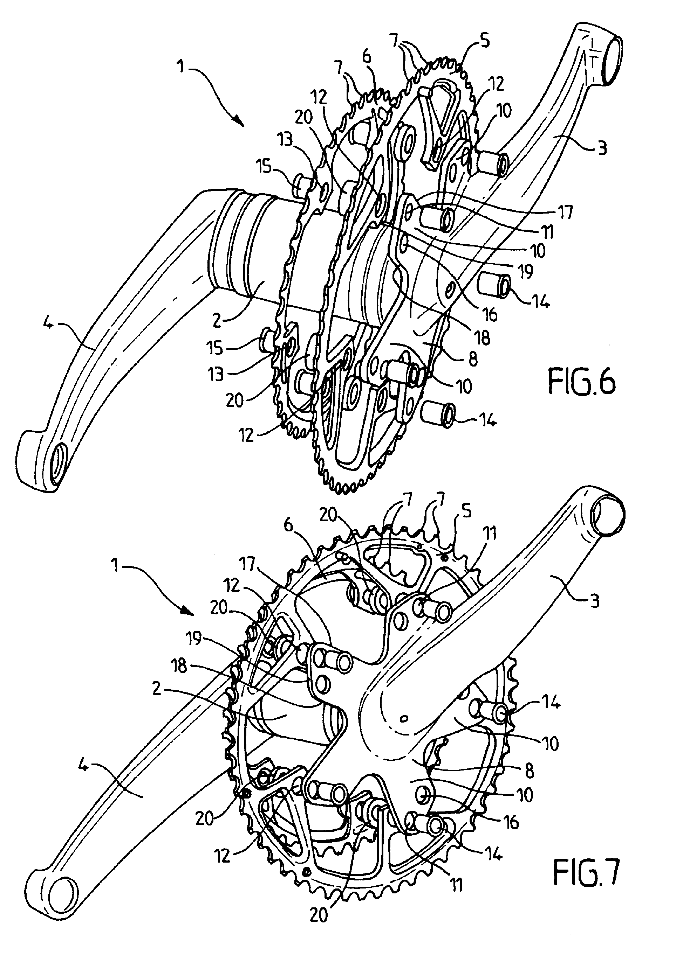

Le porte-plateau 8 a la forme d'une étoile dont les branches 10 sont régulièrement espacées. Chaque branche 10 est à son extrémité pourvue d'un premier trou de fixation 11 aligné sur un trou de fixation respectif 12 (voir figures 6 et 7) prévu dans le premier plateau 5 et sur un trou de fixation respectif 13 prévu dans le deuxième plateau 6.

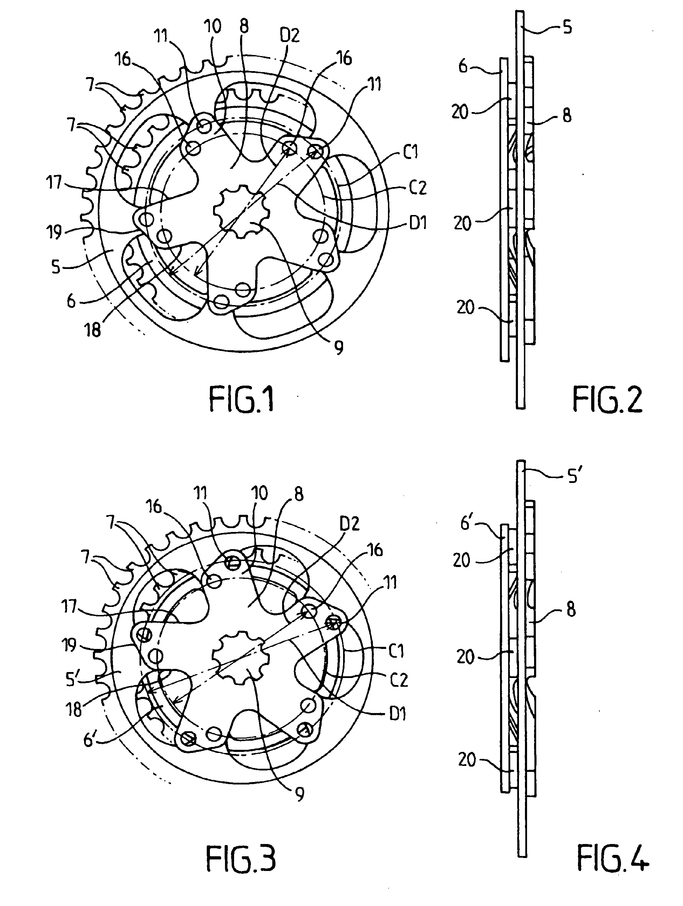

Tous les trous de fixation 11, 12 et 13 sont disposés sur un premier cercle C 1 (voir figure 1) à diamètre prédéterminé D1 et centré sur le trou central 9 du porte-plateau 8. Ce premier cercle C1 tel que représenté aux figures 1 et 2 correspond à des plateaux dits standard et présente un diamètre d'environ 130 mm.

Trois trous de fixation 11, 12 et 13 à chaque fois alignés reçoivent un moyen de fixation composé d'une vis 14 et d'un écrou épaulé 15 disposés de part et d'autre de l'ensemble constitué par le porte-plateau 8 et les premier et deuxième plateaux 5, 6 qui de préférence sont tellement ajourés qu'ils forment des couronnes comportant sur leur périphérie intérieure des saillies dans lesquelles sont aménagés les trous de fixation respectifs 12, 13, comme cela est illustré sur les figures.

Selon une caractéristique de l'invention, chaque branche 10 du porte-plateau 8 est pourvue d'un deuxième trou de fixation 16 disposé sur un deuxième cercle C2 concentrique au premier cercle C1 et présentant un diamètre D2 réduit par rapport à celui du premier cercle C1 de manière à adapter le porte-plateau 8 à deux autres plateaux dentés 5', 6' (voir figure 3) à dimension respectivement réduite par rapport à celle des premier et deuxième plateaux 5, 6 illustrés à la figure 1. Ce deuxième cercle C2 tel que représenté aux figures 1 et 2 correspond à des plateaux dits compacts et présente un diamètre d'environ 110 mm.

Chaque branche 10 du porte-plateau 8 est définie par deux bords latéraux 17, 18 sensiblement parallèles l'un à l'autre et reliés par un bord d'extrémité 19 (voir figures 1 et 3). Pour faciliter l'assemblage avec la chaîne, le bord d'extrémité 19 est de préférence oblique par rapport aux bords latéraux 17, 18.

Le premier trou de fixation 11 et le deuxième trou de fixation 16 de chaque branche 10 sont de préférence alignés l'un sur l'autre parallèlement au bord d'extrémité 19 de la branche 10.

Afin d'éviter que la chaîne d'entraînement (non représentée) vienne interférer avec le porte-plateau 8 lorsqu'elle est en prise avec le plus petit (6') des plateaux dits compacts 5', 6', il est préférable de placer les plateaux 5', 6', et par conséquent aussi 5, 6, d'un seul côté du porte-plateau 8, c'est-à-dire que le deuxième plateau 6, 6' est relié au porte-plateau 8 par l'intermédiaire du premier plateau 5, 5'.

De préférence, le porte-plateau 8 est disposé à l'extérieur des premier et deuxième plateaux 5, 6 ou 5', 6' qui se trouvent ainsi plus éloignés de la manivelle droite 3 (voir les figures 5 à 7).

Afin de maintenir l'espacement nécessaire entre les premier et deuxième plateaux 5, 6 (5', 6'), des entretoises 20 sont régulièrement disposées entre ceux-ci.

De préférence, les entretoises 20 sont constituées par des rondelles associées aux moyens de fixation 14, 15. Plus précisément, les rondelles sont enfilées sur les tiges des vis 14 correspondantes.

Ainsi, grâce à l'invention, il est possible de remplacer les premier et deuxième plateaux 5, 6 qui sont des plateaux dits standard par des premier et deuxième plateaux 5', 6' qui sont des plateaux dits compacts tout en utilisant un seul et même porte-plateau 8 qui devient ainsi un porte-plateau polyvalent.

Bien entendu, l'invention n'est pas limitée aux exemples illustrés et décrits, mais peut être appliquée à un pédalier de cycle comportant un plus grand nombre de plateaux.

## Revendications

1. Pédalier de cycle, comportant un axe de pédalier (2), deux manivelles (3, 4) reliées à des extrémités opposées dudit axe de pédalier (2), un porte-plateau (8) pourvu d'un trou central (9) recevant ledit axe de pédalier (2) et portant un premier et un deuxième plateaux dentés circulaire (5, 6) de dimension différente, ledit porte-plateau (8) présentant la forme d'une étoile dont les branches (10) sont réguliérement espacées, chaque branche (10) étant à proximité de son extrémité libre pourvue d'un trou de fixation aligné (11) sur un trou de fixation (12, 13) prévu dans lesdits premier respectivement deuxième plateaux (5, 6), lesdits trous de fixation alignés (11, 12, 13) recevant un moyen de fixation (14, 15) desdits plateaux (5, 6) sur ledit porte-plateau (8), lesdits trous de fixation (11, 12, 13) étant disposés sur un premier cercle (C1) à diamètre prédéterminé (D1) et centré sur ledit trou central (9), chaque branche (10) du porte-plateau (8) est pourvue d'un deuxième trou de fixation (16) disposé sur un deuxième cercle (C2) concentrique audit premier cercle (C1) et présentant un diamètre (D2) réduit par rapport à celui (D1) dudit premier cercle C1) **caractérisé en ce que** les deuxièmes trous de fixation sont positionnés de manière à adapter le porte-plateau (8) pour remplacer lesdits premier et deuxième plateaux par deux autres plateaux dentés circulaires (5', 6') à dimension respectivement réduite par rapport à celle desdits premier et deuxième plateaux (5, 6) et dont les trous de fixation (12, 13) sont disposés sur ledit deuxième cercle (C2).

2. Pédalier de cycle selon la revendication 1, **caractérisé par le fait que** chaque branche (10) dudit porte-plateau (8) est définie par deux bords latéraux (17, 18) sensiblement parallèles l'un à l'autre et reliés par un bord d'extrémité (19).

3. Pédalier de cycle selon la revendication 1, **caractérisé par le fait que** ledit bord d'extrémité (19) est oblique par rapport auxdits bords latéraux (17, 18).

4. Pédalier de cycle selon la revendication 3, **caractérisé par le fait que** ledit premier trou (11) et ledit deuxième trou (16) de chaque branche (10) sont alignés l'un sur l'autre parallèlement audit bord d'extrémité (19).

5. Pédalier de cycle selon l'une quelconque des revendications précédentes, **caractérisé par le fait que** ledit deuxième plateau (6, 6') est relié audit porte-plateau (8) par l'intermédiaire dudit premier plateau (5, 5').

6. Pédalier de cycle selon la revendication 5, **caractérisé par le fait que** ledit porte-plateau (8) est disposé à l'extérieur desdits premier et deuxième plateaux (5, 6 ; 5', 6').

7. Pédalier de cycle selon la revendication 5 ou 6, **caractérisé par le fait que** des entretoises (20) sont régulièrement disposées entre lesdits premier et deuxième plateaux (5, 6 ; 5', 6').

8. Pédalier de cycle selon la revendication 7, **caractérisé par le fait que** lesdites entretoises (20) sont constituées par des rondelles associées auxdits moyens de fixation (14, 15).

9. Pédalier de cycle selon l'une quelconque des revendications précédentes, **caractérisé par le fait que** lesdits premier et deuxième plateaux (5, 6) sont des plateaux dits standard et que lesdits autres plateaux (5', 6') à dimension réduite sont des plateaux dits compacts.

10. Pédalier de cycle selon la revendication 9, **caractérisé par le fait que** ledit premier cercle (C1) correspond auxdits plateaux dits standard (5, 6) et présente un diamètre d'environ 130 mm, alors que ledit deuxième cercle (C2) correspond auxdits plateaux dits compacts (5', 6') et présente un diamètre d'environ 110 mm.

11. Cycle comportant un pédalier de cycle selon l'une quelconque des revendications précédentes.

## Claims

1. Bicycle crank set, comprising a crank set shaft (2), two cranks (3, 4) which are connected at opposite ends of the said crank set shaft (2), a chain wheel holder (8) provided with a central hole (9) which receives the said crank set shaft (2) and supports a first and a second circular toothed chain wheel (5, 6) with different dimensions, the said chain wheel holder (8) having the form of a star, the branches (10) of which are regularly spaced, each branch (10) being provided in the vicinity of its free end with a securing hole (11) which is aligned on a securing hole (12, 13) provided respectively in the said first and second chain wheels (5, 6), the said aligned securing holes (11, 12, 13) receiving a means (14, 15) for securing the said chain wheels (5, 6) on the said chain wheel holder (8), the said securing holes (11, 12, 13) being disposed on a first circle (C1) with a predetermined diameter (D1) and centred on the said central hole (9), each branch (10) of the chain wheel holder (8) is provided with a second securing hole (16) which is disposed on a second circle (C2) which is concentric relative to the said first circle (C1) and has a diameter (D2) which is reduced relative to that (D1) of the said first circle (C1), **characterised in that** the two securing holes are positioned such as to adapt the chain wheel holder (8) in order to replace the said first and second chain wheels by two other circular toothed chain wheels (5', 6') with dimensions which are reduced respectively relative to those of the said first and second chain wheels (5, 6), and the securing holes (12, 13) of which are disposed on the said second circle (C2).

2. Bicycle crank set according to claim 1, **characterised in that** each branch (10) of the said chain wheel holder (8) is defined by two lateral edges (17, 18) which are substantially parallel to one another, and are connected by means of an end edge (19).

3. Bicycle crank set according to claim 1, **characterised in that** the said end edge (19) is oblique relative to the said lateral edges (17, 18).

4. Bicycle crank set according to claim 3, **characterised in that** the said first hole (11) and the said second hole (16) of each branch (10) are aligned on one another parallel to the said end edge (19).

5. Bicycle crank set according to any one of the preceding claims, **characterised in that** the said second chain wheel (6, 6') is connected to the said chain wheel holder (8) by means of the said first chain wheel (5, 5').

6. Bicycle crank set according to claim 5, **characterised in that** the said chain wheel holder (8) is disposed on the exterior of the said first and second chain wheels (5, 6; 5' 6').

7. Bicycle crank set according to claim 5 or 6, **characterised in that** braces (20) are regularly disposed between the said first and second chain wheels (5, 6; 5', 6').

8. Bicycle crank set according to claim 7, **characterised in that** the said braces (20) consist of washers which are associated with the said securing means (14, 15).

9. Bicycle crank set according to any one of the preceding claims, **characterised in that** the said first and second chain wheels (5, 6) are so-called standard chain wheels, and **in that** the said other chain wheels (5', 6') with reduced dimensions are so-called compact chain wheels.

10. Bicycle crank set according to claim 9, **characterised in that** the said first circle (C1) corresponds to the said so-called standard chain wheels (5, 6), and has a diameter of approximately 130 mm, whereas the said second circle (C2) corresponds to the said so-called compact chain wheels (5', 6'), and has a diameter of approximately 110 mm.

11. Bicycle comprising a bicycle crank set according to any one of the preceding claims.

## Patentansprüche

1. Fahrrad-Tretkurbel, mit einer Kurbelachse (2), zwei Kurbeln (3, 4), die an einander gegenüberliegenden Enden der Kurbelachse (2) befestigt sind, einem Kettenblatt-Träger (8), der mit einer zentralen Öffnung (9) versehen ist, welche die Kurbelachse (2) aufnimmt und ein erstes sowie ein zweites gezahntes kreisförmiges Kettenblatt (5, 6) von unterschiedlicher Größe trägt, wobei der Kettenblatt-Träger (8) die Form eines Sterns aufweist, dessen Arme (10) gleichmäßig voneinander beabstandet sind, wobei jeder Arm (10) nahe seinem freien Ende mit einer Befestigungsöffnung (11) versehen ist, die zu einer Befestigungsöffnung (12, 13) ausgerichtet ist, welche in dem ersten bzw. dem zweiten Kettenblatt (5, 6) angebracht ist, wobei die zueinander ausgerichteten Befestigungsöffnungen (11, 12, 13) ein Mittel (14, 15) zur Befestigung der Kettenblätter (5, 6) an dem Kettenblatt-Träger (8) aufnehmen, die Befestigungsöffnungen (11, 12, 13) auf einem ersten Kreis (C1) eines vorbestimmten Durchmessers (D1) angeordnet sind, der zu der zentralen Öffnung (9) konzentrisch ist, wobei jeder Arm (10) des Kettenblatt-Trägers (8) mit einer zweiten Befestigungsöffnung (16) versehen ist, die auf einem zweiten Kreis (C2) liegt, der konzentrisch zum ersten Kreis (C1) verläuft und einen Durchmesser (D2) aufweist, der im Vergleich zu dem (D1) des ersten Kreises (C1) kleiner ist, **dadurch gekennzeichnet, daß** die zweiten Befestigungsöffnungen so angebracht sind, daß sie den Kettenblatt-Träger (8) dafür geeignet machen, das erste und zweite Kettenblatt durch zwei andere gezahnte kreisförmige Kettenblätter (5', 6') auszutauschen, die eine Größe haben, die jeweils kleiner ist im Vergleich zu der des ersten und des zweiten Kettenblattes (5, 6) und deren Befestigungsöffnungen (12, 13) auf dem zweiten Kreis (C2) liegen.

2. Fahrrad-Tretkurbel nach Anspruch 1, **dadurch gekennzeichnet, daß** jeder Arm (10) des Kettenblatt-Trägers (8) durch zwei seitliche Ränder (17, 18) festgelegt wird, die im wesentlichen parallel zueinander verlaufen und durch einen Endrand (19) verbunden sind.

3. Fahrrad-Tretkurbel nach Anspruch 1, **dadurch gekennzeichnet, daß** der Endrand (19) schräg zu den Seitenrändern (17, 18) verläuft.

4. Fahrrad-Tretkurbel nach Anspruch 3, **dadurch gekennzeichnet, daß** die erste Öffnung (11) und die zweite Öffnung (16) jedes Armes (10) zueinander, parallel zu dem Endrand (19), ausgerichtet sind.

5. Fahrrad-Tretkurbel nach einem der vorangegangenen Ansprüche, **dadurch gekennzeichnet, daß** das zweite Kettenblatt (6, 6') an dem Kettenblatt-Träger (8) unter Zwischenschaltung des ersten Kettenblattes (5, 5') befestigt ist.

6. Fahrrad-Tretkurbel nach Anspruch 5, **dadurch gekennzeichnet, daß** der Kettenblatt-Träger (8) auf der Außenseite des ersten und des zweiten Kettenblattes (5, 6; 5', 6') angebracht ist.

7. Fahrrad-Tretkurbel nach Anspruch 5 oder 6, **dadurch gekennzeichnet, daß** Zwischenstücke (20) gleichmäßig zwischen dem ersten und dem zweiten Kettenblatt (5, 6; 5', 6') verteilt vorgesehen sind.

8. Fahrrad-Tretkurbel nach Anspruch 7, **dadurch gekennzeichnet, daß** die Zwischenstücke (20) von Unterlegscheiben gebildet sind, die den Mitteln zur Befestigung (14, 15) zugeordnet sind.

9. Fahrrad-Tretkurbel nach einem der vorhergehenden Ansprüche, **dadurch gekennzeichnet, daß** das erste und das zweite Kettenblatt (5, 6) sogenannte Standard-Kettenblätter sind und die anderen Kettenblätter (5', 6') kleinerer Größe sogenannte Kompaktkettenblätter sind.

10. Fahrrad-Tretkurbel nach Anspruch 9, **dadurch gekennzeichnet, daß** der erste Kreis (C1) den sogenannten Standard-Kettenblättern (5, 6) entspricht und einen Durchmesser von etwa 130 mm aufweist, während der zweite Zirkel (C2) den sogenannten kompakten Kettenblättern (5', 6') entspricht und einen Durchmesser von etwa 110 mm hat.

11. Fahrrad mit einer Fahrrad-Tretkurbel nach einem der vorhergehenden Ansprüche.
